# EUROPEAN PATENT APPLICATION

(11) **EP 3 139 316 A1**
(43) Date of publication of application: **08.03.2017**
(21) Application number: 16174097.2
(22) Date of filing: 13.06.2016
(51) Int. Cl.: G06Q 10/00, G06F 11/30

(54) **ASSESSMENT OF HARDWARE ITEM VALUE AND CONDITION THROUGH GUIDED DIAGNOSTICS**

(30) Priority: 03.09.2015 US 201562213676 P
(71) Applicant: Veesto Ltd., 8222411 Kiryat-Gat (IL)
(72) Inventor: COHEN, Eden, 8222411 Kiryat-gat (IL)
(74) Representative: Dennemeyer & Associates S.A.

(57) **Abstract**

A computer implemented method of estimating a value of a network connected mobile devi ce, comprising:
1) Using a client diagnostics software tool executed by a network connected mobile device for:
(a) P resenti ng a user i nterface to a testi ng user.
(b) Guiding the testing user to perform one or more functional operations to one or more of a plurality of hardware components that are integrated in the network connected mobile device.
(c) Recordi ng a result captured by the one or more hardware components duri ng the functi onal operations.
(d) Forwarding automatically the result to a remote central unit for an analysis to evaluate a condition of the one or more hardware component.
(e) Presenting one or more viewing users with an estimated value of the network connected mobile device. The estimated value is calculated by the remote central unit based on the condition of the one o more hardware components.

## Description

### BACKGROUND

T he present i nventi on, i n some embodi ments thereof, rel ates to estimating a value and/or a condition of a hardware item, and, more specifically, estimating a value and/or a condition of a hardware item based on results obtained by guiding a user to perform a diagnostics session.

Trading used goods has become a wide spread phenomena, especially as accessibility to online trading markets is immediate nowadays. Moreover as electronic devices, appliances and/or products are widely used, users are bound to experience malfunctions with the electronic devices/appliances/products which may require upgrade and/or repair.

Offering a used hardware item for sale may present an issue for the seller with respect to pricing the hardware item, especially in case the hardware item present issues, for example, it is not fully functional, it has a history of failures and/or it suffers an exterior defect(s) and/or aesthetic flaw(s). In addition, in the event the owner of the hardware item experiences problems and/or malfunctions with the hardware item, the owner may want to get a repair/upgrade cost assessment. In order to set the price for a used hardware item the seller may visit professional service provider to get the hardware checked in order to get a cost and/or repair evaluation. In case the seller knows and/or thinks he knows the nature of the problem(s) he may explore the internet to find similar cases and get a cost evaluation by similarity to other cases.

On the other hand the condition of the hardware item offered for sale presents uncertainties to the buyer. The buyer may need to place his confidence on the seller to disclose the real condition of the hardware item which may lead to a situation in which the buyer purchases an item with no clear notion of what he really bought.

Optionally, the buyer may need to physically meet with the seller to examine the hardware item personally and/or visit a professional service center to get cost/repair assessment. This is naturally most inconvenient and in many not possible due to the geographical distance between the seller and users making a physical meeting not feasible.

Alternatively, a user experiencing problems with a hardware item in his possession may want to diagnose the failed hardware in order to explore repair costs and/or repair options. The user may also want to upgrade his hardware item and may therefore want to explore one or more upgrade options and/or upgrade cost.

### SUMMARY

According to some embodiments of the present invention, there are provided systems and methods for estimating a value of a network connected mobile device by using a client diagnostics software tool executed by a network connected mobile device which, presents a user interface to a testi ng user, guides the testi ng user to perform one or more functional operations to one or more hardware components that are integrated in the network connected mobile device, recording a result captured by one or more of the hardware components during the functional operation(s) and forwarding automatically the result to a remote central unit for an analysis to evaluate a condition of the one or more hardware component. One or more viewing users are presented with an estimated value of the network connected mobile device. The estimated value is calculated by the remote central unit based on the condition which includes one or more condition categories, such as functional condition, exterior condition, warranty period and maintenance history.

Optionally, the client diagnostics software tool communicates directly with the one or more hardware component with no human intervention in order to acquire the result.

Optionally, the client diagnostics software tool is used to guide the testing user in performing the one or more functional operation in order to evaluate a condition of one or more other hardware items that are independent of the network connected mobile device while the client diagnostics software tool is executed on the network connected mobile device.

Optionally, the analysis is performed by the network connected mobile device.

Optionally, the estimated value is calculated by the network connected mobile device.

Optionally, the result is captured by one or more of: the one or more hardware component on which the functional operation(s) is performed, one or more other hardware components integrated in the network connected mobile device and/or one or more sensors integrated in the network connected mobile device.

Optionally, the remote central unit retrieves information from one or more other remote servers for calculating the estimated value.

Optionally, the remote central unit presents the viewing user with one or more service providers capable of repairing one or more malfunctions detected in the network connected mobile device by the analysis.

Optionally, the remote central unit stores a record of the network connected mobile device on one or more remote storage servers. The record is uniquely associated to the network connected mobile device and contains one or more of: the result, the analysis, the condition and the estimated value.

According to some embodiments of the present invention, there are provided a client diagnostics software tool for estimating a value of a network connected mobile device which includes a network connected mobile device integrating a processor and a non-transitory computer readable storage medium. The di agnosti cs software tool includes the following:
- First program instructions for presenting a user interface to guide a testi ng user in performing one or more functional operations to one or more hardware components integrated in the network connected mobile device.
- Second program instructions for recording a result captured by the one or more hardware components during the functional operations.
- Third program instructions for transmitting automatically the result to a remote central unit for an analysis to evaluate a condition of the one or more hardware components.
- Fourth program instructions for presenting one or more viewing users with an estimated value of the network connected mobile device. The estimated value is received from the remote central unit which calculates the estimated value based on the condition.

The client diagnostics software tool is provided by the processor as one or more of: execution of a local application, access to a remote unit, web based service, chat session and a web robot (bot) connection. The first, second, third and fourth program instructions are stored on the non-transitory computer readable storage medium and executed by the processor.

Optionally, the user interface is implemented using the network connected mobile device through one or more of a plurality of human-machine interfaces, such as, text, graphics, audio, light, motion, gesture and tactile.

Optionally, the client diagnostics software tool comprises a fifth program instructions for guiding the testing user in performing the functional operations in order to evaluate a condition and calculate an estimated value of one or more other hardware items that are independent of the network connected mobile device. The client diagnostics software tool is executed on the network connected mobile device. The fifth program instructions are stored on the non-transitory computer readable storage medium and executed by the processor.

Optionally, the client diagnostics software comprises a sixth program instructions for posting a post offering the network connected mobile device for sale on one or more trading marketplace arenas. The post is associated with a report presenting the analysis to the one or more viewing users. The sixth program instructions are stored on the non-transitory computer readable storage medium and executed by the processor.

Optionally, the client diagnostics software tool of claim 11, wherein said client diagnostics software tool is provide by said processor as at least one of: execution of a local application, access to a remote unit, a web based service, chat session and a web robot (bot) connection.

According to some embodiments of the present invention, there is provided a central unit system for esti mati ng a val ue of a network connected mobile device.

T he central unit system comprises:
- An interface for communicating with a plurality of client diagnostics software tool instances executed on a plurality of network connected mobile devices.
- A program store storing a code.
- A processor coupled to the first interface and to the program store. The processor is adapted for implementing the stored code, the code comprising:
   ▪ Code instructions for receiving a plurality of results from one or more of the plurality of network connected mobile devices, each associated with a respective one of the network connected mobile devices. Each result depicts an outcome of one or more functional operation performed to one or more of a plurality of hardware component integrated in the respective network connected mobile device.
   ▪ Code instructions for analyzing the result to evaluate a condition of the one or more hardware components.
   ▪ Code instructions for calculating an estimated value of the one or more network connected mobile devices based on the condition.

Optionally, the processor is adapted for implementing the following code stored:
▪ Code instructions for communicating with one or more other remote servers to retrieve one or more of a plurality of cost data items for calculating the estimated value. The cost data items present one or more of: market value, repair cost, upgrade cost and replacement parts cost.

Optionally, the processor is adapted for implementing the following code stored:
▪ Code instructions for transmitting to the one or more network connected mobile device information of one or more service providers capable of repairing one or more malfunctions detected in the network connected mobile device during the analysis.

Optionally, the processor is adapted for implementing the following code stored:
▪ Code instructions for communicating with one or more of a plurality of remote storage servers to store the analysis.

Optionally, the central unit system allows a user using the client diagnostics software tool to place a post of the network connected mobile device for sale on one or more of a plurality of trading marketplace arenas. The post is associated with a report presenting the analysis to one or more viewing users.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the i nventi on may be practiced.

In the drawings:
FIG. 1 is a schematic illustration of an exemplary system for assessing estimated value of a hardware item through user guided diagnostics, according to some embodiments of the present invention;
FIG. 2 is a flowchart of an exemplary process for assessing estimated value of a hardware item through user guided diagnostics, according to some embodiments of the present invention;
FIG. 3 is a schematic illustration of an exemplary system for estimating value of one or more hardware items using a client diagnostics software tool for guiding a user to perform diagnostics on the hardware item, according to some embodiments of the present invention;
FIG. 4 is a screenshot of an exemplary graphical user interface (GUI) presented to a user by an exemplary software application for making a selection, accordi ng to some embodiments of the present i nventi on;
FIG. 5 is a screenshot of an exemplary interactive GUI presented to a user by an exemplary software application for confirming or canceling an operation, accordi ng to some embodiments of the present i nventi on;
FIG. 6 is a screenshot of an exemplary interactive GUI allowing a user to insert data to an exemplary software application, according to some embodiments of the present i nventi on;
FIG. 7 is a screenshot of an exemplary interactive GUI presenting a user with information of service providers, according to some embodiments of the present invention;
FIG. 8 is a screenshot of an exemplary interactive GUI presenting a user with extended information of service providers, according to some embodiments of the present i nventi on;
FIG. 9 is a screenshot of an exemplary interactive GUI allowing a user to post a hardware item for sale on a marketplace arena, according to some embodiments of the present invention;
FIG. 10 is a schematic illustration of an exemplary remote central unit system for assessing value of a hardware item through self-diagnostics, according to some embodiments of the present invention; and
FIG. 11 is a screenshot of an exemplary interactive GUI presenting a user with a report stating the score of one or more hardware components and/or test result and/or an overall score for a hardware item and an estimated value for the hardware item, accordi ng to some embodiments of the present invention.

### DETAILED DESCRIPTION

The present invention, in some embodiments thereof, relates to estimating a value and/or a condition of a hardware item, and, more specifically, to estimating a value and/or a condition of a hardware item based on results obtained by guiding a user to perform a diagnostics session.

According to some embodiments of the present invention, there are provided systems, methods and computer programs for estimating a value and/or a condition of a one or more hardware items such as a network connected mobile device, for example, a smartphone, a tablet, a wearable device such as a smartwatch and/or a laptop, based on the result(s) of one or more guided diagnostics procedures presented to a testing user using a network connected mobile devices. It should be noted that the guided functional procedures may be executed on a plurality of network connected mobile devices, however, for brevity, throughout this specification, reference is made to a single network connected mobile device to represent one or more of the plurality of network connected mobile devices. A client diagnostics software tool which includes a user interface is provided to guide the testing user through one or more guided functional procedures. The client diagnostics software tool, for example, a locally installed application, a widget, a chat session with a web robot (bot) via a chat service, and/or any browser loaded web service, instructs the testing user to perform the guided diagnostics procedure(s) which involve operating one or more hardware components integrated in the network connected mobile device. The testing user may be instructed by a user interface (UI), for example, a text input/output, graphic user interface (GUI) presented on the display of the network connected mobile device, audio recorder(s) and/or speaker(s), light indications from light source(s), a motion and/or gesture captured by a capturing component integrated in the network connected mobile device, and/or tactile interface available by tactile components integrated in the network connected mobile device. The guided functional procedures may be delivered through, for example, sets of manual steps presented as textual instructions, visual flowcharts, and/or audio instructions sequence. The guided functional procedures may also be delivered through, for example, the GUI presenting visual instructions for manual and/or expressional operations such as for example, checking facial gestures and/or hand gestures, the audio interface playing audible instructions to instruct the testing user to perform manual and/or vocal operations. Results of the guided diagnostics procedure(s) are transmitted from the network connected mobile device to a remote central unit, for instance one or more network connected servers. The remote central unit analyzes the results to evaluate a condition of the one or more hardware components and/or an overall condition of the network connected mobile device. Based on the analysis the remote central unit identifies a score for each of the hardware components and/or an overall score for the network connected mobile device. Optionally, model and/or manufacturer information of the network connected mobile device as well as user input, for example exterior condition, warranty period and/or repair/upgrade history may also be transmitted to the remote central unit. The condition evaluated by the remote central unit is based on one or more of a plurality of condition categories for example, functional condition, operational condition, exterior condition, market value, warranty period and/or repair/upgrade history which may present one or more repair and/or upgrade sessions the network connected mobile device had undergone in the past. Based on the overal score of the network connected mobile device the remote central unit may estimate a value of the network connected mobile device, i.e. market value and/or total value. Optionally, based on the analysis the remote central unit may assess a repair cost in case one or more malfunctions are detected in the network connected mobile device during the analysis of the results received from the network connected mobile device. The value, score and/or analysis outcome may be presented to the testi ng user and/or to a plurality of viewing users. In the event an upgrade to the network connected mobile device is required, the client diagnostics software tool may present an estimated upgrade cost received from the remote central which evaluates the upgrade cost based on the analysis. Optionally, the upgrade cost is calculated using information received from one or more other remote servers, for example, servers of service center quoting a service to the network connected mobile device, servers of a manufacturer presenting cost of part(s) for the network connected devices and the like. The diagnostics software tool may associate the diagnostics results, score, value and/or condition with the specific tested network connected mobile device through the devices unique international mobile station equipment identity (IMEI) number. Alternatively the analysis of the results, the condition evaluation and/or the value estimations are performed by the network connected mobile device itself.

According to some embodiments of the present invention, the client diagnostics software tool which is executed on the network connected mobile device is used to diagnose one or more hardware items which are not part of the network connected mobile device itself, such as, electronic device, electronic appliance and/or electronic product, for example, television set, multimedia system, stereo system and the like. The client diagnostic software tool may guide the testing user through one or more functional procedures for diagnosing hardware component(s) of the hardware item. Results of the functional procedures may be sent to the remote central unit for analysis to evaluate a condition in order to identify a score of each one of the hardware component(s) and/or an overall score for the one or more hardware items. Based on the overall score, an estimated value of the one or more hardware items may be generated and presented to the viewing user(s). In addition repair and/or upgrade cost may be generated and presented to the viewing user(s) in case one or more malfunctions are identified in the one or more hardware components.

Providing a tool for performing guided diagnostics procedures by the testing user is therefore highly desirable to allow the testing user to get an accurate evaluation on the operational condition of the hardware item and/or estimated value of the network connected mobile device and/or hardware item for the purpose of selling, upgrading and/or repairing the hardware item. The testing user who has limited and/or no technical knowledge relating to a hardware item may avoid the need to approach one or more professional service providers thus saving the cost and time involved in receiving the value assessment and/or functional condition analysis from the one or more professional service providers. Furthermore, in case the hardware item is posted for sale on a trading marketplace arena, one or more viewing users interested in buying the hardware item may get a report stating an accurate assessment of the condition and/orvalue of the hardware item. This report which may be attached to the hardware item posted on the trading marketplace arena may be controlled and/or regulated by the trading marketplace arena and/or one or more commercial, professional and/or governmental organizations which may provide commitment on the validity and/or integrity of the condition/value assessment report.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As will be appreciated by one skilled in the art, aspects of the present invention may be embodied as a system, method or computer program product. Accordingly, aspects of the present invention may take the form of an entirely hardware embodiment, an entirely software embodi ment (including firmware, resident software, micro-code, and the like.) or an embodiment combining software and hardware aspects that may all generally be referred to herein as a 'circuit, _ 'module_ or 'system._ Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the Following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wire line, optical fiber cable, RF, and the like., or any suitable combination of the foregoi ng.

Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. The program code may execute enti rely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

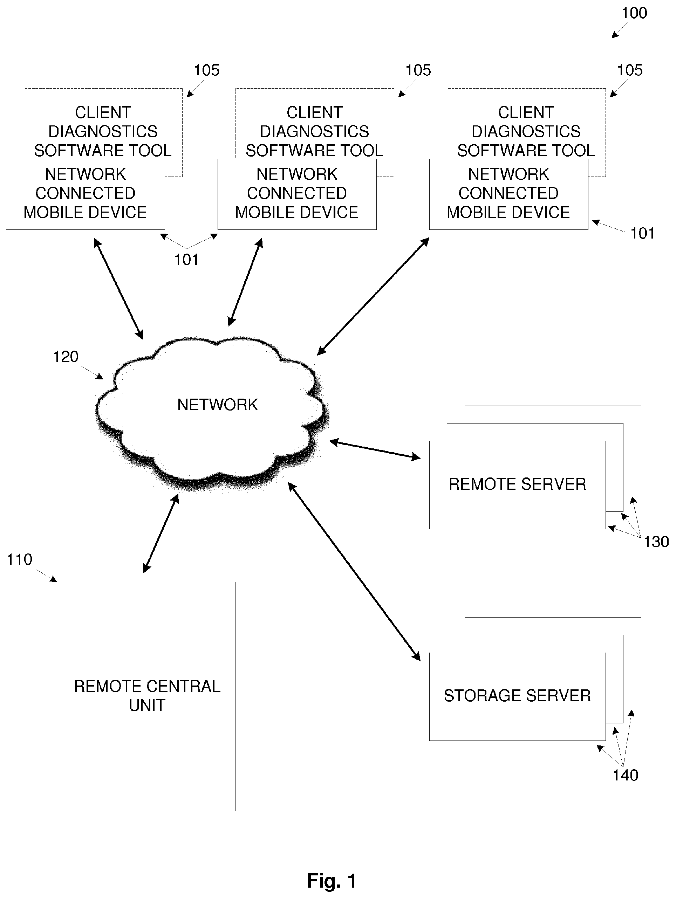

Reference is now made to FIG. 1 which is a schematic illustration of an exemplary system for estimating a value and/or condition of a hardware item through user guided diagnostics, according to some embodiments of the present invention. This allows a testing user who is interested in purchasing a hardware item to be presented with a report indicative of a technical condition and/or value and/or repair cost of the hardware item. A system 100 includes one or more of a plurality of network connected mobile devices 101, a remote network connected central unit 110, one or more of a plurality of remote network connected servers 130 and one or more of a plurality of network connected storage servers 140. Communication between the one or more network connected mobile devices 101 and the remote central unit 110 as well as between the remote central unit 110 and the one or more remote servers 130 and/or the one or more storage servers 140 is performed through a network 120, for example, internet and/or cellular network. A client diagnostics software tool 105 is provided through each of the one or more network connected mobile devices executes (hereinafter the networks connected mobile device 101 stands for the plurality of network connected mobile device 101). The client diagnostics software tool 105 presents a UI which guides a testing user through one or more guided functional procedures for diagnosing one or more hardware components of the one or more network connected mobile device 101. The result(s) of the one or more guided diagnostics procedures is transmitted over the network 120 to the remote central unit 110. The results may include, for example, logs, readings collected from the one or more hardware components, state of the one or more hardware components, images, videos, metadata, and the like. For example, readings may include values collected by communicating with the hardware component(s), logs may present an operational sequence of the hardware component(s) and images and/or videos may depict functional attributes of the hardware component(s). Using the result(s) received from the network connected mobile device 101, the remote central unit 110 evaluates the condition of the one or more hardware components and assigns them a score. The condition is based on one or more of a plurality of condition categories for example, functional condition, operational condition, exterior condition, market value, warranty period and/or repair/upgrade history which may present one or more repair and/or upgrade sessions the network connected mobile device had undergone in the past. The score and/or condition of the one or more hardware components are aggregated to generate an overall score and/or an overall condition of the network connected mobile device 101. Based on the score and/or condition of the one or more hardware components, the remote central unit 110 calculates an estimated value of the network connected mobile devices 101 and/or a repair cost in case one or more malfunctions are detected i n the network connected mobile device 101. The remote central unit 110 may also assess an upgrade cost for an upgrade to the network connected mobile device 101 if requi red by the testi ng user.

Optionally, the remote central unit 110 may communicate with the one or more other remote servers 130 to retrieve from the additional information to support the value assessment and/or cost/upgrade cost.

Optionally, the client diagnostics software tool 105 communicates with the remote central unit 110 to allow the testi ng user to post the network connected mobi le device 101 and/or the one or more hardware items for sale on one or more online trading marketplace arenas, for example, Amazon, eBay and/or Craigslist. A report presenting the value and/or overall score and/or the condition and/or diagnostics results may be associated with the post offering the one or more network connected mobile devices and/or one or more hardware items for sale. An icon may be assigned to report indicating the type and/or scope of diagnostics information available for the posted network connected mobile device 101. The remote central unit 110 may store a record hol di ng the i nformati on collected on the network connected mobile device 101 and/or the one or more hardware items. The record may include, for example, supplemental information provided by the testing user, diagnostics results, score(s) of the one or more hardware components, overal score, estimated value and/or cost of repai r/upgrade.

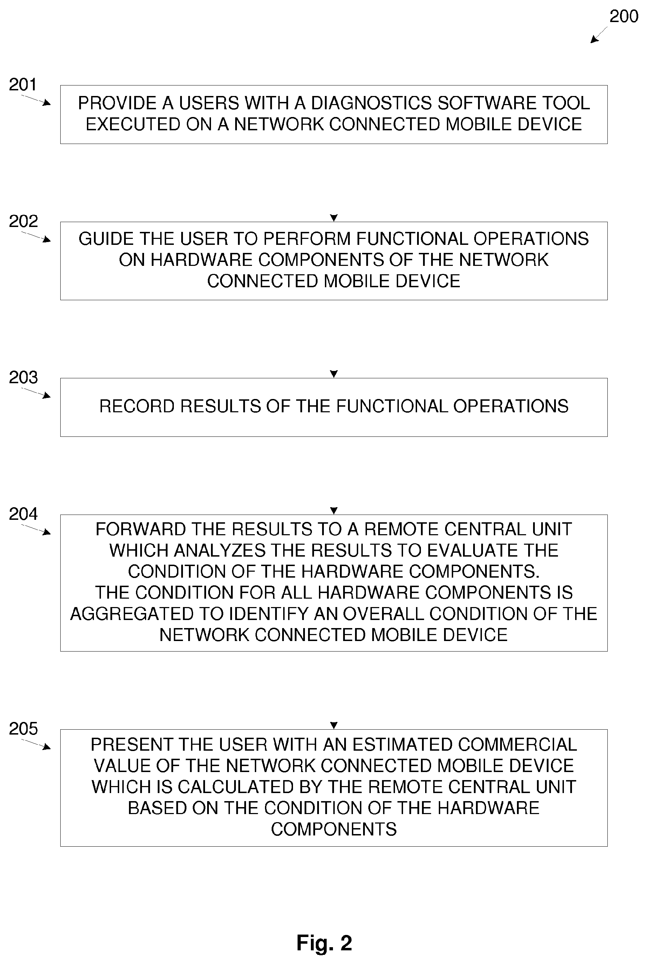

Reference is now made to FIG. 2 which is an exemplary process for assessing an estimated value of a hardware item through self-diagnostics, according to some embodiments of the present invention.

As shown at 201, a process 200 is started with a testing user using one or more network connected mobile devices such as the network connected mobile device 101 that is provided with a client diagnostics software tool such as the client diagnostics platform 105 that is executed on the network connected mobile device 101.

As show at 202, the client diagnostics software tool 105 guides the testing user to perform one or more diagnostics procedures to diagnose one or more hardware components of the network connected mobile device 101. The diagnostic procedures are executed by the testing user who performs a sequence of one or more functional operations as instructed by the client diagnostics software tool 105. Guiding the testing user is done through a UI included in the client diagnostics software tool 105. The client diagnostics software tool 105 may execute one or more diagnostic procedures directly to the one or more hardware components with no user intervention. One or more diagnostic procedures may be performed on one or more hardware items which are not the network connected mobile device 101 in order to diagnose operational state of the one or more hardware items.

As show at 203, the client diagnostics software tool 105 collects the results of the one or more functional operations. The results may be captured by one or more sensors integrated in the network connected mobile device 101, for example, camera, microphone, speaker, accelerometer, gyroscope, magnetic sensor, proximity sensor, infrared (IR) sensor, light sensor, vibrator engine, temperature sensor, light emitting diode (LED), global positioning system (GPS) sensor, near field chip (NFC) sensor and the like. Optionally, the results are captured by the tested hardware component themselves (on which the one or more functional operations are performed) and/or by another one or more hardware components integrated in the network connected mobile device.

As shown at 204, the collected data is forwarded to a remote central unit such as the remote central unit 110 to be analyzed by the remote central unit 110 in order to evaluate the condition of the one or more hardware components. The remote central unit 110 may assign a score to each of the hardware components. The score represents the condition of the associated one or more hardware components as a quantitative numeric value which may be used for quantitative calculations of the esti mated val ue and/or repai r/upgrade cost.

As shown at 205, the client diagnostics software tool 105 presents the testing user with a value of the network connected mobile device 101 and/or a repair/upgrade cost of the network connected mobile device 101 in case one or more malfunctions are detected. The presented value and/or repair/upgrade cost is received from the remote central unit 110 which estimates the value and/or repair/upgrade cost based on the condition and/or score of the one or more hardware components of the network connected mobile device 101. The same is done with respect to the one or more hardware items that are diagnosed in the event the evaluation and/or assessment are performed on the one or more hardware items.

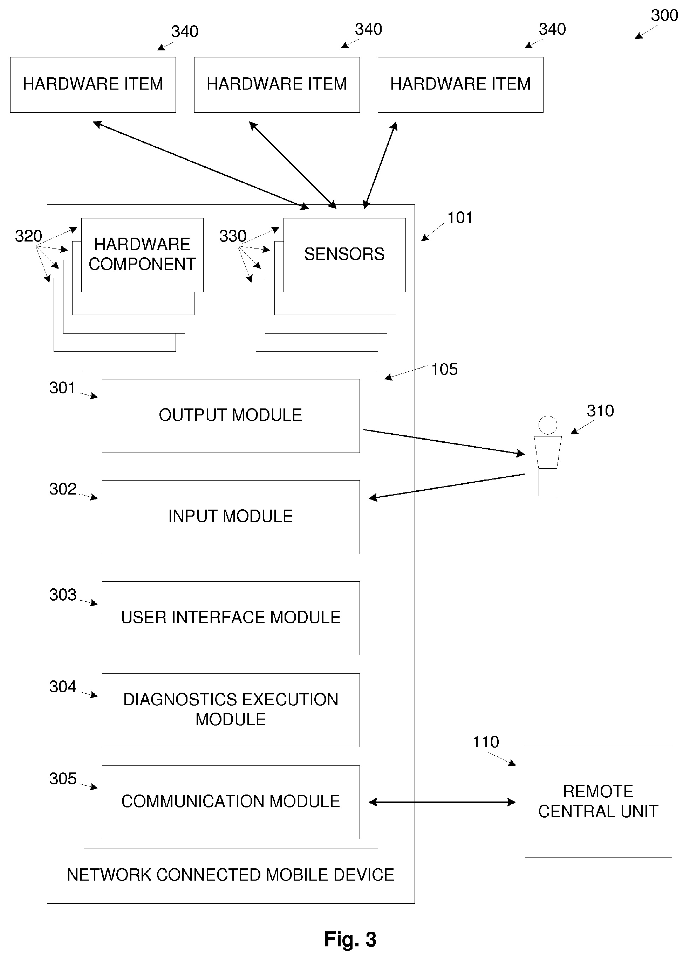

Reference is now made to FIG. 3 which is a schematic illustration of an exemplary system for assessing estimated value of one or more hardware items using a client diagnostics software tool for guiding a testing user to perform diagnostics on the hardware item, according to some embodiments of the present invention. A system 300 includes a client software application such as the client diagnostics software tool 105 which is executed on a network connected mobile device such as the network connected mobile device 101. The client diagnostics software tool 105 may be utilized through, for example, local application, website, web based service, chat session and/or web robot (bot) connection which may be executed on the network connected mobile device. The client diagnostics software tool 105 includes an output module 301, an input module 302, a user interface module 303, a diagnostics execution module 304 and a communication module 305. Wherein a module refers to a plurality of program instructions stored in a non-transitory medium and executed by a processor, the non-transitory medium and the processor are integrated within the network connected mobile device 101.

The output module 301 presents a testing user 310 with step by step instruction to perform one or more diagnostic procedures on one or more hardware components 320 of the network connected mobile device 101. Diagnostics data is captured by one or more sensors 330 and/or by the tested hardware component 320 and/or by one or more of the other hardware components 320 during execution of the one or more diagnostics procedures. The input module 302 receives input from the testing user 310. The user interface module 303 includes a UI engine generating information presented to the testing user 310 and collecting input inserted by the testing user 310. The UI used throughout the one or more guided diagnostic procedures to present and/or collect information to/from the testing user 310 may be utilized i n the form of, for example, text, graphics, light, audio, motion, gesture and/or tactile interface.

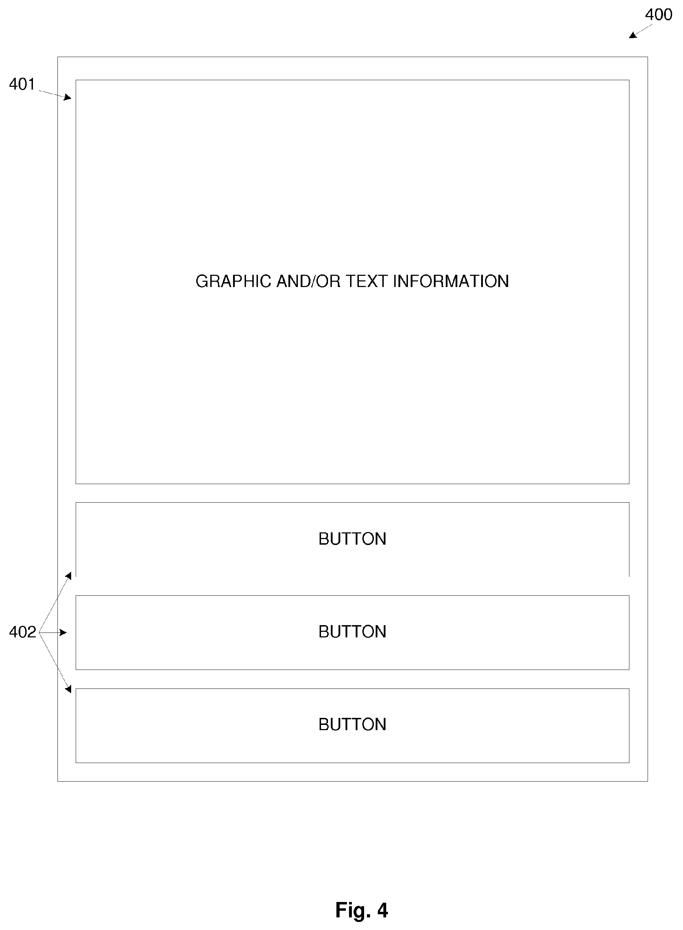

Reference is now made to FIG. 4 which is a screenshot of an exemplary graphical user interface (GUI) presented to a user by an exemplary software application for making a selection, according to some embodiments of the present invention. An exemplary screenshot 400 describes a GUI screen of a client diagnostics software tool such as the client diagnostics software tool 105. The GUI includes a data presentation area 401 and a one or more of a plurality of soft buttons 402 to allow a testi ng user such as the testi ng user 310 to select an action. Each one of a plurality of actions is associated with one of the buttons 402. The GUI screen 400 is generated by a user interface engine such as the user interface module 301 and presented to the testing user 310 through an output module such as the output module 301. Input made by the testing user 310 using the GUI is captured by an input module such as the input module 302.

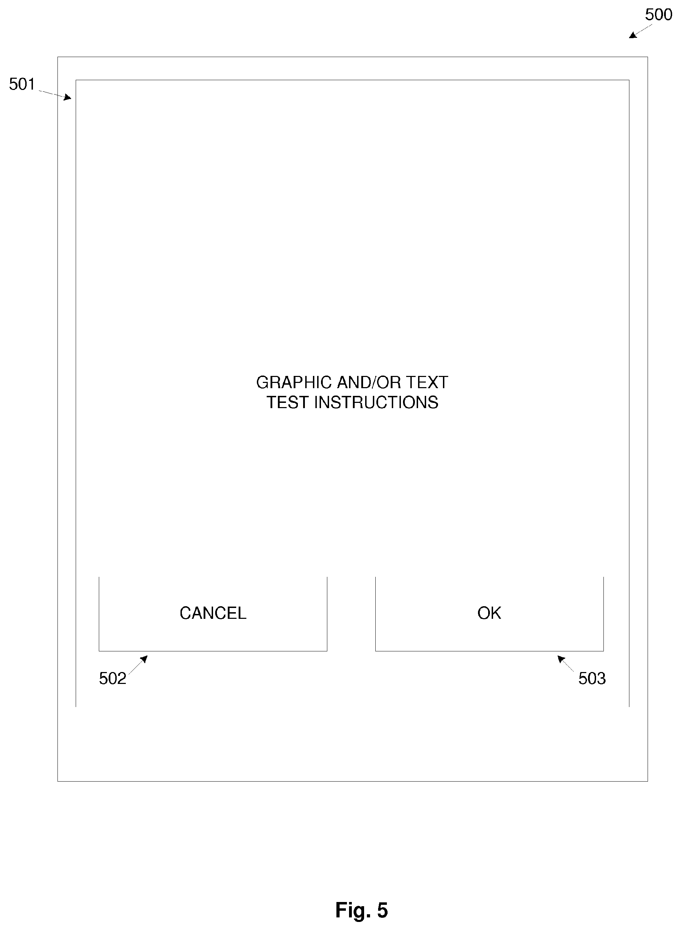

Reference is no made to FIG. 5 which is a screenshot of an exemplary interactive GUI presented to a user by an exemplary software application for confirming or canceling an operation, according to some embodiments of the present invention. An exemplary screenshot 500 describes a GUI screen of a client diagnostics software tool such as the client diagnostics software tool 105. The GUI screen includes a data presentation area 501 and two soft buttons 502 and 503 to allow the testing user such as the testing user 310 to cancel an action and/or operation through pressing the CANCEL soft button 502 or confirm the acti on and/or operati on by pressing the OK soft button 503. The GUI screen 500 is generated by a user interface engine such as the user interface module 301 and presented to the testing user 310 through an output module such as the output module 301. Input made by the testing user 310 using the GUI is captured by an input module such as the input module 302.

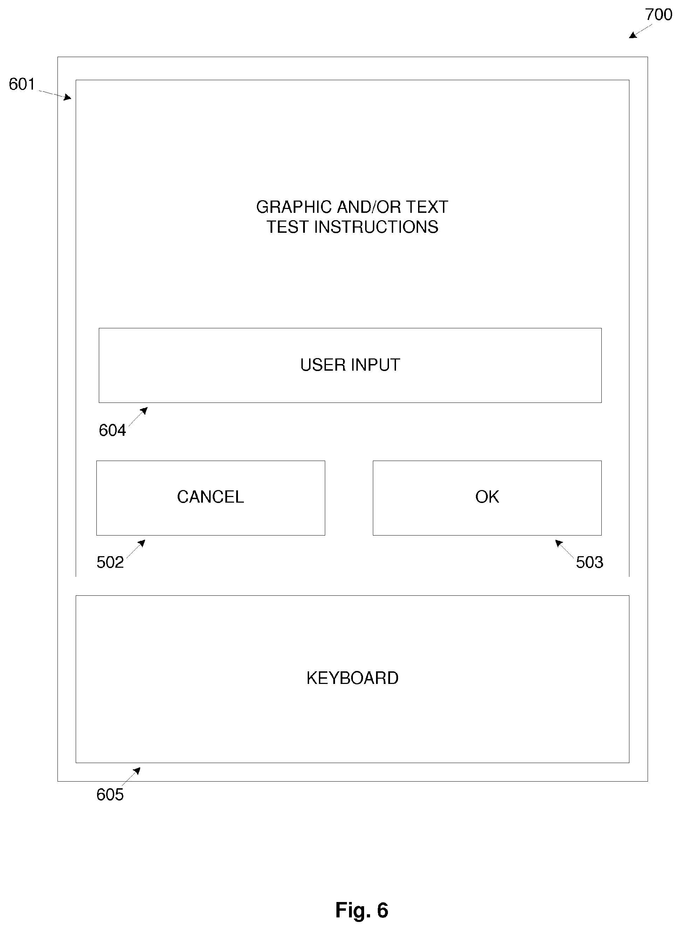

Reference is no made to FIG. 6 which is a screenshot of an exemplary interactive GUI allowing a user to insert data to an exemplary software application, according to some embodiments of the present invention. An exemplary screenshot 600 describes a GUI screen of a client diagnostics software tool such as the client diagnostics software tool 105. The GUI screen includes a data presentation area 601, two soft buttons 502 and 503 to allow a testing user such as the testing user 310 to cancel or confirm an action and/or operation, one or more of a plurality of soft input keys, for example, soft keyboard 605 to allow a testing user such as the testing user 310 to insert data and a user input presentation area 604 which presents the data inserted by the testi ng user 310. The GUI screen 600 is generated by a user interface engine such as the user interface module 301 and presented to the testing user 310 through an output module such as the output module 301. Input made by the testing user 310 using the GUI is captured by an input module such as the input module 302.

Reference is now made once again to FIG. 3. The diagnostics execution module 304 initiates one or more diagnostics routines to execute the one or more diagnostic procedures through the one or more sensors 330 and collects from the one or more sensors 330 test data collected during the execution of the one or more diagnostic procedures. The one or more sensors 330 may include for example, camera, microphone, speaker, accelerometer, gyroscope, magnetic sensor, proximity sensor, IR sensor, light sensor, vi brator engi ne, temperature sensor, LED, G PS sensor, etc. In addition to executing the one or more diagnostics procedures using the one or more sensors 330, the client diagnostics software tool 105 may execute one or more diagnostics procedures through direct communication with one or more of the hardware components 320, for example, processor, battery, wireless communication module, Bluetooth communication module and/or cellular communication module. The one or more diagnostics procedures performed through direct communication with the one or more hardware components 320 may be performed with no user intervention. The diagnostics results, the score, the estimated value and/or the condition may be associated with the specific diagnosed network connected mobile device 101 through the device's unique IMEI number.

Following is a list of exemplary diagnostics procedures that may be provided by the client diagnostics software tool 105 executed on the network connected mobile device 101 using a UI to guide the testing user 310 to diagnose the one or more hardware components 320 of the network connected mobile device 101:
(a) Accelerometer diagnostics - save the current accelerometer readings in a storage memory, guide the testing user 310 through the UI to shake the network connected mobile device 101 and compare the readings received from the accelerometer while the network connected mobile device 101 is shaking to the readings stored in the storage memory to identify a change in the readings which may indicate the accelerometer sensor is functional.
(b) Gyroscope diagnostics - save the current gyroscope readings in a storage memory, guide the testing user 310 through the UI to tilt the network connected mobile device 101 and compare the readings received from the gyroscope while the network connected mobile device 101 is tilted to the readings stored in the storage memory to identify a change in the readings which may indicate the gyroscope sensor is functional.
(c) Magnetic sensor diagnostics - save the current magnetic sensor readings in a storage memory, guide the testing user 310 through the UI to flip the network connected mobile device 101 and compare the readings received from the magnetic sensor while the network connected mobile device 101 is flipped to the readings stored in the storage memory to identify a change in the readings which may indicate the gyroscope sensor is functional.
(d) Proximity sensor diagnostics - save the current proximity sensor readings in a storage memory, guide the testing user 310 through the UI to cover the proximity sensor for a predefined period of time and compare the readings received from the proximity sensor while the proximity sensor readings is covered and to the readings stored in the storage memory to identify a change in the readings which may indicate the proximity sensor is functional.
(e) Light sensor diagnostics - save the current light sensor readings (L ux) in a storage memory, guide the testing user 310 through the UI to cover the light sensor for a predefined period of time and compare the readings received from the light sensor while the light sensor is covered to the readings stored in the storage memory to identify a change in the readings which may indicate the light sensor is functional.
(f) Wireless communication component diagnostics - guide the testing user 310 through the UI to connect a wireless communication components integrated in the network connected mobile device 101 to an available wireless network and hold while trying to establish a network connection through the wireless communication component in order to identify its functionality.
(g) Bluetooth communication component diagnostics - guide the testing user 310 through the UI to enable a Bluetooth interface of the network connected mobile device 101, enable a second Bluetooth device in the proximity of the network connected mobile device 101 and wait while trying to pair the Bluetooth interface of the network connected mobile device 101 with the second Bluetooth device in order to identify the functionality of the Bluetooth interface.
(h) Cellular communication component diagnostics - guide the testing user 310 through the UI to wait while testing current cellular signal strength by communicating with the cellular communication component integrated in the network connected mobile device 101 to get signal strength readings.
(i) GPS component diagnostics - guide the testing user 310 through the UI to go to an outdoor environment and stop and wait while the GPS component integrated in the network connected mobile device 101 tries to acquire a GPS signal.
(j) Assisted GPS (A-GPS) diagnostics - guide the testing user 310 through the UI to go to an outdoor environment and stop and wait while the cellular communication component integrated in the network connected mobile device 101 tries to connect to one or more cellular antennas.
(k) Charger component/circuit diagnostics - guide the testing user 310 through the UI to connect the network connected mobile device 101 to a functional charger and wait for a predefined period of time, store in a storage memory current readings from the charging component and/or charging circuit of the network connected mobile device 101 and compare the readings stored in the storage memory, for example, charger state and/or battery level change to manufacturer recommended values. The manufacturer recommended values may be retrieved from a remote server such as the remote servers 130.
(l) Battery diagnostics - guide the testing user 310 through the UI to wait while storing in storage memory battery health readings from the battery management component of the network connected mobile device 101. The battery health data stored in storage memory may be compared with health information available from the manufacturer of the battery. The manufacturer recommended values may be retrieved from a remote server such as the remote servers 130.
(m)Microphone diagnostics - guide the testing user 310 through the UI to record a short audio sequence of speech and/or music and store it in storage memory, analyze the recorded sequence quality using one or more signal processing tools executed on the network connected mobile device 101 in order to identify functionality of the microphone.
(n) Speaker(s) diagnostics - guide the testing user 310 through the UI to listen at the speaker(s). Play out random 3 digits at the speaker(s) of the network connected mobile device 101 and guide the testing user 310 to type the digits he heard at the speakers. Compare the typed digits with the digits played out in order to identify functionality of the speakers).
(o) Earpiece diagnostics - guide the testing user 310 through the UI to listen at the earpiece. Play out random 3 digits at the earpiece of the network connected mobile device 101 and guide the testing user 310 to type the digits he heard at the earpiece. Compare the typed digits with the digits played out in order to identify functionality of the earpiece.
(p) Headphone jack diagnostics - guide the testing user 310 through the UI to connect a functional headphone to the headphone jack of the network connected mobile device 101 and listen. Play out random 3 digits at the headphone output jack and guide the testing user 310 to type the digits he heard at the earpiece. Compare the typed digits with the digits played out in order to identify functionality of the headphone jack.
(q) Vibrator engine diagnostics - guide the testing user 310 through the UI to hold the network connected mobile device 101, identify the number of vibration events which are initiated and type the number of vibration events he identified. Compare the typed number to the actual vibration events driven by the vi brator engi ne in order to identify functionality of the vi brator.
(r) Camera sensor diagnostics - guide the testing user 310 through the UI to capture a picture of a face through the front and/or rear camera sensors of the network connected mobile device 101 and analyze the picture quality using one or more image processing tools executed on the network connected mobile device 101 in order to identify functionality of the camera sensor.
(s) LED flash diagnostics - guide the testing user 310 through the UI to look at the L E D flash of the network connected mobile device 101 and type the number of flash event he identifies. Compare the typed number to the actual flash events of the LED in order to identify functionality of the LED.
(t) Touchscreen diagnostics- guide the testing user 310 through the UI to perform a touch sequence on the touchscreen of the network connected mobile device 101. Compare the typed sequence to the expected sequence in order to identify functionality of the touchscreen.
(u) Hard buttons diagnostics - guide the testing user 310 through the UI to press one or more hard buttons of the network connected mobile device 101 and determine if the pressed one or more buttons are identified by the network connected mobile device 101 in order to identify functionality of the hard buttons.
(v) NFC communication components diagnostics - guide the testing user 310 through the UI to enable the NFC interface of the network connected mobile device 101, enable a second NFC device in close proximity to the network connected mobile device 101 and wait while trying to establish communication with the second NFC device in order to identify functionality of the NFC interface.

In some embodiments, the client diagnostics software tool 105 includes gui dance instructions for performing one or more diagnostic routines to di agnose one or more other hardware items 340 which are not part of the network connected mobile device, such as an electronic device, electrical appliance and/or electronic product, for example computer display, television set, multimedia system, audio system, laundry machine, etc. television set (TV), multimedia system, stereo system, air conditioning system (AC), washing machine, etc. Testing of the one or more other hardware items is done by the using the client diagnostics software tool 105 guiding the testing user 310 through the UI and collecting the data of the one or more diagnostics procedures using the one or more sensors 330 and/or one or more hardware components 320 of the network connected mobile device 101. The diagnostics results, score, value and/or condition may be associated with the specific diagnosed hardware item 340 through the hardware items unique serial number (S/N).

Following is a list of exemplary diagnostics procedures that may be provided by the client diagnostics software tool 105 provided by the network connected mobile device 101 using the UI to guide the testing user 310 to diagnose one or more hardware components of the one or more hardware items 340:
(a) TV and/or computer screen diagnostics - guide the testing user 310 through the UI to set a test pattern on the screen, capture a picture of the screen using the camera sensor of the network connected mobile device 101 and identify quality of the screen, for example, number of black (burned) pixels on the screen and/or distorted display using one or more image processing tools executed on the network connected mobile device 101. Alternatively the captured picture is transmitted to the remote central unit 110 which processes the picture to identify the screen quality.
(b) TV, stereo system and/or multimedia system audio output diagnostics - guide the testing user 310 through the UI to place the microphone of the network connected mobile device 101 at the close proximity of the speakers of the tested one or more hardware items 340, for example, TV, stereo system and/or multimedia system, play a short music track on the tested one or more hardware items 340, record the played track and analyze the recorded sequence quality using one or more signal processing tools executed on the network connected mobile device 101.
(c) AC and/or TV IR receiver diagnostics - guide the testing user 310 through the UI to place the microphone of the network connected mobile device 101 at the close proximity of the speakers of the tested one or more hardware items, for example, TV, stereo system and/or multimedia system, play a short music track on the tested one or more hardware items, record the played track and analyze the recorded sequence quality using one or more signal processing tools executed on the network connected mobile device 101.
(d) Washing machine spinning engine diagnostics - guide the testing user 310 through the UI to place the network connected mobile device 101 on top the washing machine, set the washing machine to a predefined operation mode, collect the readings of the accel erometer sensor of the network connected mobile device 101 and compare to data available from the manufacturer of the washi ng machi ne.

Optionally, the client diagnostics software tool 105 asks the testing user 310 for supplemental information that may be used by the analysis performed by the remote central unit 110. The supplemental information may include, for example, warranty period, repair/upgrade history which details repairs and/or upgrades the network connected mobile device 101 had undergone in the past, and/or exterior condition characteristics.

The collected results and/or the supplemental i nformati on is transmitted to a remote central unit such as the remote central unit 110 which analyzes it to evaluate the condition and/or the score for the one or more hardware components 320 and aggregate the condition and/or score for the one or more hardware components to generate an overall condition and/or overall score for the network connected mobile device 101. Based on the overal condition and/or overal score the remote central unit 110 calculates an esti mated val ue of the network connected mobile device 101. The remote central unit 110 may also generate a repai r/upgrade cost in case one or more malfunctions are detected in the one or more hardware components 320 through the one or more diagnostic procedures. The condition, the estimated value, the score(s), the analysis results and/or the diagnostic procedures results report may be transmitted back to the network connected mobile device 101 executing the client diagnostics software tool 105 and is presented to the testing user 310.

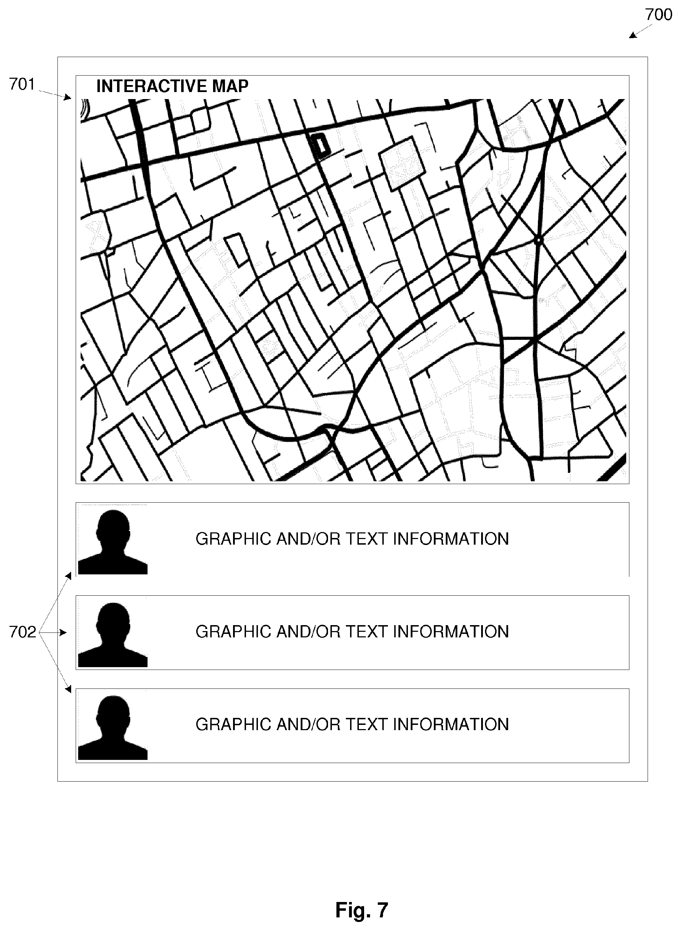

Reference is now made to FIG. 7 which is a screenshot of an exemplary interactive GUI presenting a user with information of service providers, according to some embodiments of the present invention. A n exemplary screenshot 700 descri bes a GUI screen of a client diagnostics software tool such as the client diagnostics software tool 105 in which one or more professional service providers 702 are presented to a testing user such as the testing user 310. In case one or more malfunctions are detected in the network connected mobile device 101 and/or in the one or more hardware items 340 a repair/upgrade may be required. The client diagnostics software tool 105 may present the testing user 310 with information of the one or more professional service providers 702 through the UI for example GUI as is presented in the screenshot 700. The client diagnostics software tool 105 may provide the testing user 310 with location of the one or more professional service providers 702 displayed on a map 701. Information of the one or more professional service providers 702 may be presented to the testing user 310 based on the current and/or future location of the testi ng user 310. Current location of the testi ng user 310 may be extracted, for example, from a GPS component integrated in the network connected mobile device 101 and/or a cellular triangulation system detecting to location of the network connected mobile device 101. Future location may be extracted from one or more of a plurality of electronic tools, for example, calendar, task manager and/or meeting organizer executed on the network connected mobile device 101.

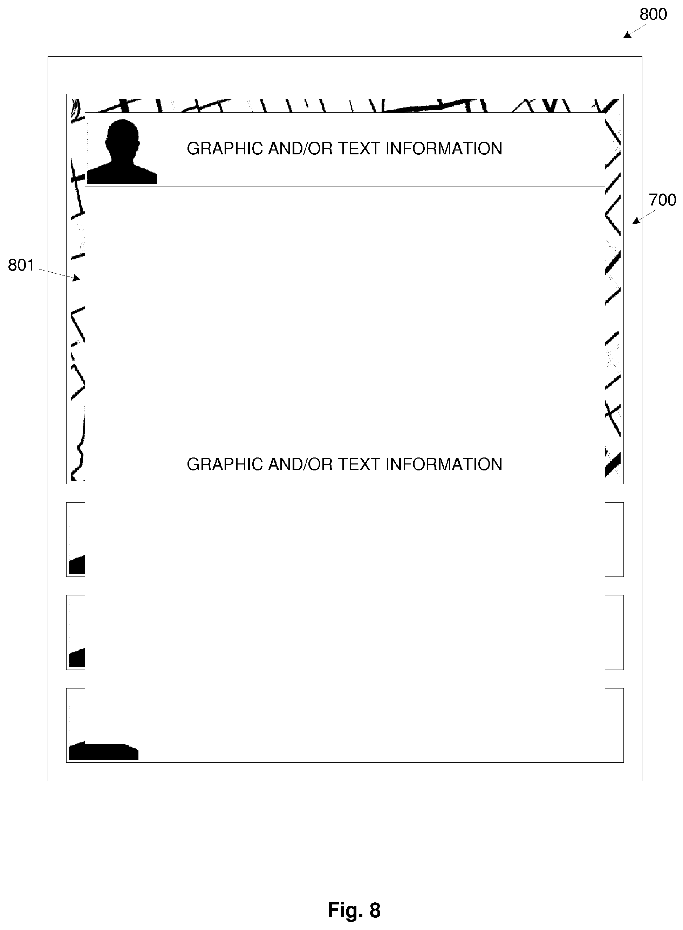

Reference is now made to FIG. 8 which is screenshot of an exemplary interactive GUI presenting a user with extended information of service providers, according to some embodiments of the present invention. An exemplary screenshot 800 describes a GUI screen of a client diagnostics software tool such as the client diagnostics software tool 105 in which extended information 801 of one of the one or more professional service providers 702 is presented to a testing user such as the testing user 310. The extended information 801 may include for example, address, contact information, customer review, promotion information, etc. the extended information 801 may be displayed on top the screenshot 700 to maintain coherence between screens captured in the screenshots 700 and 800.

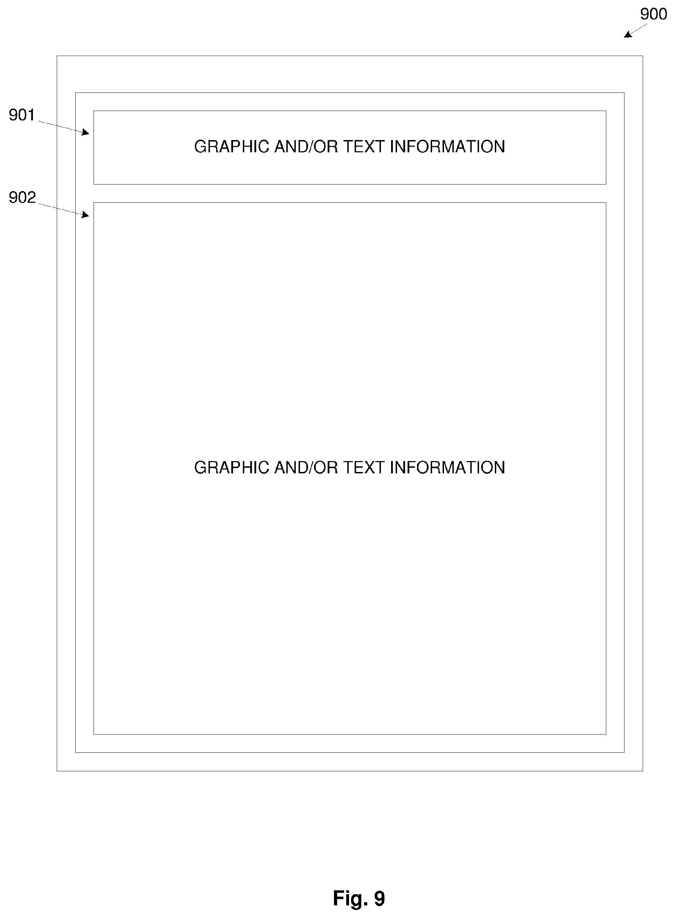

Reference is now made to FIG. 9 which is a screenshot of an exemplary interactive GUI allowing a user to post a hardware item for sale on a marketplace arena, according to some embodiments of the present invention. An exemplary screenshot 900 describes a GUI screen of a client diagnostics software tool such as the client diagnostics software tool 105 allowing a testing user such as the testing user 310 to post the one or more network connected mobile device such as the network connected mobile device 101 and /or one or more hardware items such as the hardware item 340 for sale on one or more onl i ne trading marketplace arenas. An interactive input area 901 is available for the testing user 310 to edit a post 902 offering the network connected mobile device 101 and/or the hardware item 340 for sale. The post may include the condition and/or score of the one or more hardware components 320, the overall condition and/or overall score of the network connected mobile device 101, the analysis results, diagnostics procedures results report and/or the esti mated val ue of the network connected mobile device 101 and/or hardware item 340. The post may also be associated with a report detailing the data collected during execution of the one or more diagnostics procedures.

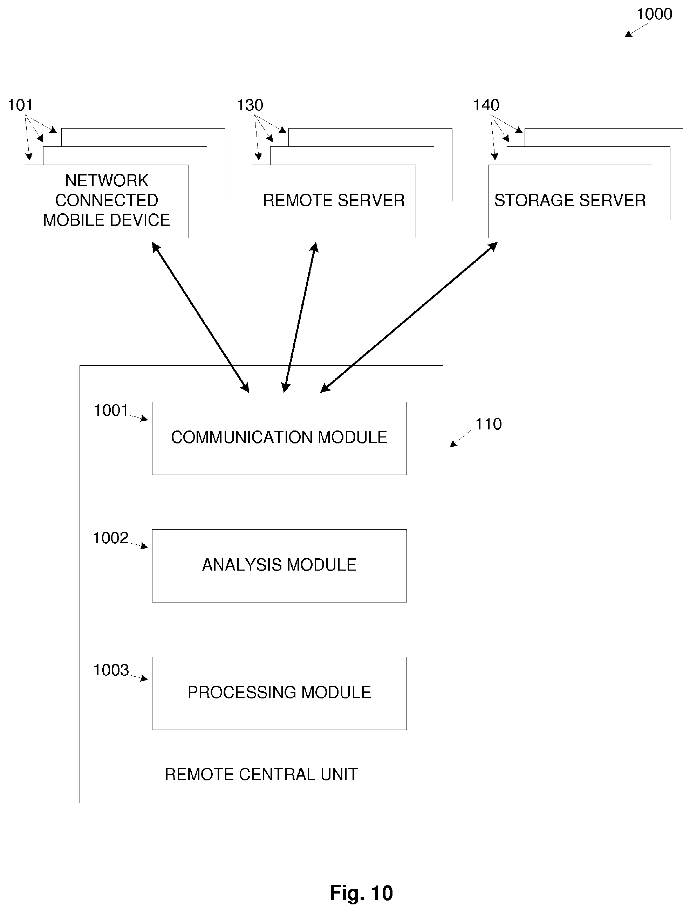

Reference is now made to FIG. 10 which is a schematic illustration of an exemplary remote central unit system for assessing estimated value of a hardware item through guided diagnostics, according to some embodiments of the present invention. A system 1000 presents a remote central unit such as the remote central unit 110 which communicates with one or more client diagnostics software tool such as the diagnostics software tool 105 which is executed on one or more network connected mobile devices such as the network connected mobile device 101. The remote central unit 110 includes a communication module 1001, an analysis module 1002 and a processing module 1003. Wherein a module refers to a plurality of program instructions stored in a non-transitory medium and executed by a processor, the non-transitory medium and the processor are integrated within the remote central unit 110. The analysis module 1002 receives through the communication module 1001 the results of the one or more guided functional procedures performed to the network connected mobile device 101 and/or of one or more hardware items such as the hardware item 340 by a testi ng user such as the testi ng user 310 usi ng one or more mobile device such as the network connected mobile device 101. The analysis module 1002 analyzes the results to evaluate the condition of the one or more hardware components 320 of the network connected mobile device 101 and/or the hardware item 340 and to assign the score of the network connected mobile device 101 and/or the hardware item 340 respectively. The condition may include for example, functional condition, operational condition, current market value, warranty period, repair/upgrade history and/or exterior condition. The evaluated condition and assigned score is forwarded by the analysis module 1002 to the processing module 1003 which calculates an estimated value and/or overall condition and/or cost of repair/upgrade in case the one or more malfunctions are detected in the network connected mobile device 101 and/or the hardware item 340 during the one or more diagnostic procedures. The processing module 1003 may also receive the supplemental information collected and provided by the user 310 through the client diagnostics software tool 105. The supplemental information may be used for the estimated value calculation. The value and/or cost of repair/upgrade are transmitted from the processing module 1003 to the network connected mobile devices 101 through the communication module 1001 to be presented to the testing user 310 using the GUI of the client diagnostics software tool 105.

Optionally, the remote central unit 110 communicates with one or more other remote servers such as the remote servers 130 to retrieve one or more cost data items to support the evaluation of condition of the hardware components 320 and/or the calculation of the estimated value of the network connected mobile devices 101 and/or the hardware item 340. The one or more cost data items may include for example:
▪ Manufacturer specifications of the network connected mobile device 101 and/or the hardware item 340.
▪ Market value of a model of the network connected mobile device 101 and/or the hardware item 340.
▪ Market value of similar items as the network connected mobile device 101 and/or the hardware item 340.
▪ Repair/upgrade cost offerings from one or more professional service providers.
▪ Replacement parts costs as available from the manufacturer and/or from the one or more professional service providers. Replacement parts costs may also be retrieved from online listings available from, for example, online trading marketplace arenas and/or replacement parts providers.
▪ Value of the items of the model and/or similar models available by scanning one or more online trading marketplace arenas, classified section(s) of one or more on-line news sites and/or classified section(s) of one or more social networks.

In some embodiments of the present invention, calculating the estimated value of the network connected mobile device 101 and/or the hardware item 340 is done using big data resources. The remote central unit 110 may maintain records of a plurality of past trading transactions. The remote central unit 110 may scan and/or analyze the past records to identify trading transactions of items similar to the network connected mobile device 101 and/or to the hardware item 340. In the event such records are found the transaction information which may include the value contained in the records may be used to calculate the estimated value of the network connected mobile device and/or the hardware item 340. Optionally, the remote central unit 110 communicates with one or more remote servers such as the remote server 130 and/or with one or more remote storage servers such as the storage server 140 to obtain the records of the past tradi ng transacti ons.

Optionally, a recommended repair/upgrade cost may be distributed by the remote central system 110 to one or more of a plurality of service providers capable of repai ri ng/upgradi ng the network connected mobile devi ce 101 and/or the hardware item 340. One or more of the plurality of service providers who are willing to comply with the recommended repair/upgrade cost are marked as approved service providers. The one or more approved service providers may be offered to the testing user 310 as candidates to perform the repair/upgrade in case the testing user 310 wants to repair/upgrade the network connected mobile device 101 and/or the hardware item 340. The recommended repair/upgrade cost may be negotiated between the remote central system 110 and one or more of the plurality of service providers.

Optionally, the remote central unit 110 communicates with one or more other storage servers such as the storage servers 140 for storing the evaluation data of the network connected mobile device 101 and/or the hardware item 340. The stored data may be used for one or more of a plurality of actions and/or statistical analysis to be performed by one or more interested parties, for example hardware manufacturers, service centers and/or trading marketplace arenas.

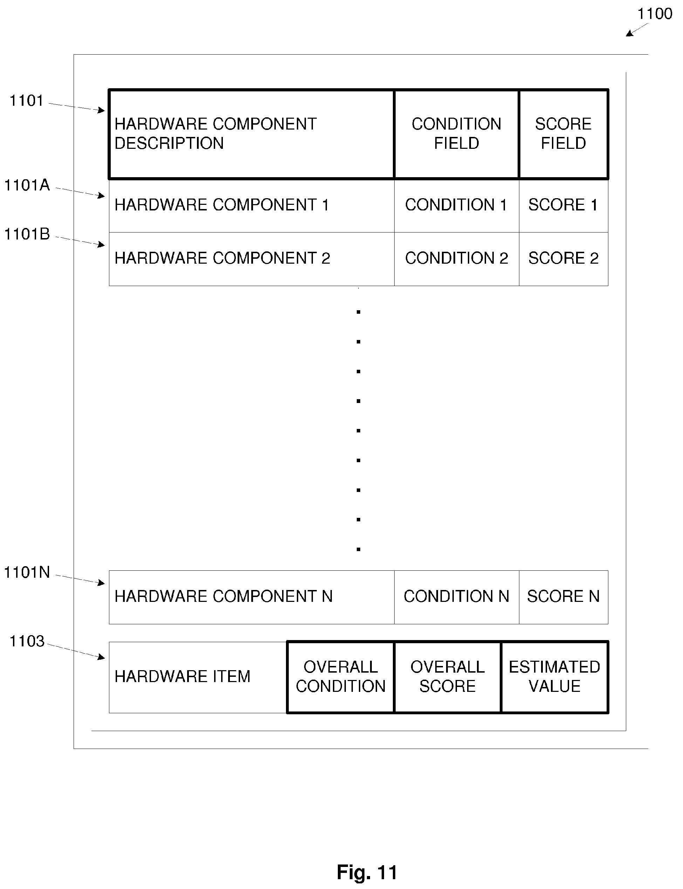

Reference is now made to FIG. 11 which is a schematic illustration of a screenshot of an exemplary interactive GUI presenting a user with report stating a condition and a score of one or more hardware components, an overall condition and an overall score for a hardware item and an estimated value for the hardware item, according to some embodiments of the present invention. An exemplary screenshot 1100 describes a GUI screen of a client diagnostics software tool such as the client diagnostics software tool 105 presenting a testing user such as the testing user 310 an exemplary report of the analysis and estimated value calculation performed for a network connected mobile device such as the network connected mobile device 101 and/or a hardware item such as the hardware item 340. The report includes a header field 1101 which includes one or more fields, for example, description of the hardware component 340, condition of the hardware component(s) 320 and/or score of the hardware component 320. Optionally, additional information relating to the hardware component 340 and/or the network connected mobile device and/or the hardware item 340 may be included in the report. The additional information may include for example, outcome of the analysis of the diagnostics results performed to the hardware component 320, information used to calculate the estimated value, comments provided by the testing user 310 and/or free text provided by the testing user 310. The report includes one or more entries 1101A, 1101B through 1101N, each associated with one of the hardware component 320 and depicting information related to the associated hardware component 320, for example, the results, the condition as evaluated during the analysis and/or the score. Each entry presents the one or more fields with the data of its respective hardware component 340.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordi nary skill in the art to understand the embodiments disclosed herein.

It is expected that during the life of a patent maturing from this application many relevant systems, methods and computer programs will be developed and the scope of the term commerce information and price is intended to include all such new technologies a priori.

As used herein the term 'about_ refers to 10%.

The terms "comprises", "comprising", "includes", "including", 'having_ and their conjugates mean "including but not limited to". This term encompasses the terms "consisting of" and "consisting essentially of".

T he phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word 'exemplary_ is used herein to mean 'serving as an example, instance or illustration_. Any embodiment described as 'exemplary_ is not necessarily to be construed as preferred or advantageous over other embodiments and/or to exclude the incorporation of features from other embodiments.

The word 'optionally_ is used herein to mean 'is provided in some embodiments and not provided in other embodiments_. Any particular embodiment of the invention may include a plurality of 'optional_ features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. T his applies regardless of the breadth of the range.

Whenever a numerical range is indicated herein, it is meant to include any cited numeral (fractional or integral) within the indicated range. The phrases 'ranging/ranges between_ a first indicate number and a second indicate number and 'ranging/ranges from_ a first indicate number 'to_ a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A computer implemented method of esti mati ng a val ue of a network connected mobile device, comprising:
usi ng a processor of a network connected mobile device for:
i nstructi ng a presentati on of a user interface to a testi ng user, sai d user interface guides said testing user to perform at least one of a plurality of functional operations to at least one of a plurality of hardware components that are integrated in said network connected mobile device;
recording a result captured by at least one of said plurality of hardware components during said at least one functional operation; and
forwarding automatically said result to a remote central unit for an analysis to evaluate a condition of said at least one hardware component;
wherein at least one viewing user is presented with an estimated value of said network connected mobile device, said estimated value is calculated by said remote central unit based on said condition.

2. The method of claim 1, wherein said user interface is used to guide said testing user in performing said at least one functional operation in order to evaluate a condition of at least one other hardware item that is independent of said network connected mobile device, said user interface is executed on said network connected mobile device.

3. The method of claim 1, further comprising said result is captured by at least one of: said at least one hardware component on which said at least one functional operation is performed, at least one another hardware component integrated in said network connected mobile device and at least one sensor integrated in said network connected mobile device.

4. The method of claim 1, further comprising said remote central unit retrieves information from at least one of a plurality of other remote servers for calculating said estimated value.

5. The method of claim 1, further comprising said remote central unit presents said viewing user with at least one of a plurality of service providers capable of repairing at least one of a plurality of malfunctions detected in said network connected mobile device by said analysis.

6. The method of claim 1, further comprising said remote central unit stores a record of said network connected mobile device on at least one of a plurality of remote storage servers, said record is uniquely associated to said network connected mobile device and contains at least one of, said result, said analysis, said condition and said estimated value.

7. A central unit system for estimating a value of a network connected mobile device, comprising:
an interface for communicating with a plurality of client diagnostics software tool instances executed on a plurality of network connected mobile devices;
a program store storing a code; and
a processor coupled to the first interface and to the program store, said processor is adapted for executing the stored code, said code comprising:
code instructions for receiving a plurality of results from at least one of said plurality of network connected mobile devices each associated with a respective one of said plurality of network connected mobile devices, said each result depicts an outcome of at least one functional operation performed to at least one of a plurality of hardware component integrated in said respective network connected mobile device;
code instructions for analyzing said result to evaluate a condition of said at least one hardware component; and
code instructions for calculating an estimated value of said at least one network connected mobile device based on said condition.

8. The central unit system of claim 7, further comprisi ng said processor is adapted for i mpl ementi ng the following code stored:
code instructions for communicating with at least one of a plurality of other remote servers to retrieve at least one of a plurality of cost data items for calculating said estimated value, said at least one cost data item presents at least one of: market value, repair cost, upgrade cost and replacement parts cost.

9. The central unit system of claim 7, further comprising further comprising said processor is adapted for implementing the following code stored:
code instructions for transmitting to said at least one network connected mobile device information of at least one of a plurality of service providers capable of repairing at least one of a plurality of malfunctions detected in said network connected mobile device during said analysis.

10. The central unit system of claim 7, further comprisi ng said processor is adapted for i mpl ementi ng the following code stored:
code instructions for communicating with at least one of a plurality of remote storage servers to store said analysis.

11. The central unit system of claim 7, further comprising allowing a user using said client diagnostics software tool to place a post of said network connected mobile device for sale on at least one of a plurality of trading marketplace arenas, said post is associated with a report presenting said analysis to at least one viewing user.

12. The central unit system of claim 7, wherein said processor is adapted to execute code instructions for posting a post offering said said at least one hardware component for sale on at least one of a plurality of trading marketplace arenas, said post is associated with a report presenting said esti mated value to at least one viewing user.

13. The central unit system of claim 7, wherein said processor is adapted to execute code instructions for communicating with said at least one network connected mobile device in order perform at least one of:
transmit information of at least one of a plurality of service providers capable of repairing at least one of a plurality of malfunctions detected in said network connected mobile device during said analysis, and
receive from a user using said client diagnostics software tool instructions to place a post of said network connected mobile device for sale on at least one of a plurality of trading marketplace arenas, said post is associated with a report presenting said analysis to at least one viewing user.
